# EUROPEAN PATENT APPLICATION

(11) **EP 1 561 711 A1**
(43) Date of publication of application: **10.08.2005**
(21) Application number: 05002101.3
(22) Date of filing: 02.02.2005
(51) Int. Cl.: B65G 15/58, B65G 17/44, B65G 15/42

(54) **Process for applying an insert onto a toothed belt**

(30) Priority: 03.02.2004 IT BO20040045
(71) Applicant: VISION TECH S.r.l., 40011 Anzola Emilia (Bologna) (IT)
(72) Inventor: Rubino, Attilio, 40011 Anzola Emilia (Bologna) (IT); Verri, Marco, 40068 S. Lazzaro Di Savena (Bologna) (IT); Venturi, Ambros, 40068 Idice Di S. Lazzaro (IT)
(74) Representative: Dall'Olio, Giancarlo

(57) **Abstract**

A process for the application of an insert (2) to a toothed belt (3) includes making a through hole (6) in a region corresponding to a tooth (5) of the toothed belt (3). An insert (2), having substantially the same cross-section as the hole (6) and having on its outer surface, at least a series of grooves (20), is introduced into the through hole (6). Then, the insert (2) is clamped between a pair of electrodes (7) and a suitable electrical tension is applied thereto for a prefixed period of time, so as to cause a localized plastic deformation of the toothed belt (3) near the insert (2), so as to fill the grooves (20) of the insert (2), to make the insert (2) stably integral with the toothed belt (3).

## Description

The present invention relates to a process for applying an insert onto a toothed belt.

It is known that toothed belts of synthetic material are widely used for transmitting the motion to mechanical means.

The toothed belts have an inner strengthening core made of threads, e.g. metallic or synthetic, buried in the synthetic material during the molding, so as to increase their mechanical resistance, in particular to pulling.

At present, the toothed belts are often used also to transport articles, in particular in automatic machines, by the use of conveying means, such as teeth or cams or the like, situated on the surface of the toothed belt turned outwards.

Therefore, the problem exists for application of the conveying means onto the outer surface of the toothed belt.

For this purpose, according to a known process, one or more teeth of the already molded belt are removed and replaced by suitable metallic blocks, in particular reproducing the shape of the removed teeth, having threaded holes, so that the required conveying means can be screwed thereto.

However, this process requires a very difficult and expensive mechanical processing of the already molded belt.

According to another known procedure, metallic bushes are inserted, dipped at a prefixed distance, during the belt forming step, so that conveying means can be applied thereto.

However, this procedure has low flexibility, because the exact arrangement of the elements to apply afterwards must be defined during the belt molding.

Otherwise, it is necessary to prepare a bigger number of bushes than actually required, which results in weakening of the toothed belt, because the interposition of the bushes interrupts the continuity of the strengthening core also in points, in which it is not indispensable.

The object of the present invention is to resolve the above problem, by formulating a procedure, which allows application of an insert in a desired position along a toothed belt in an easy and rapid way.

Another object of the present invention, within the previous one, is to propose a procedure, which allows application of the insert without compromising the mechanical resistance of the toothed belt.

A further object is to propose a procedure for the application of an insert onto a toothed belt, whose concept is simple, functioning reliable and the use versatile.

The above mentioned objects are obtained in accordance with the contents of the claims.

The characteristic features of the invention will be pointed out in the following description of some preferred but not exclusive embodiments, with reference to the enclosed figures, in which:
- Figure 1 is a longitudinal section view of a portion of a toothed belt prepared for the application of an insert;
- Figure 2 is a top view of a portion of a toothed belt prepared for the application of an insert;
- Figure 3 is a lateral, partially section view, of an insert to be applied to a toothed belt according to the proposed procedure;
- Figure 4 is a corresponding top view of the insert of Figure 3;
- Figures 5 and 6 are respective lateral views of different embodiments of the insert;
- Figures 7, 8 and 9 are subsequent steps of the proposed procedure;
- Figures 10 - 15 show a different embodiment of the insert to be applied, in a series of views corresponding to the ones of Figures 1 - 6;
- Figures 16 - 17 are respectively lateral and cross-section view of a toothed belt prepared for the application of a different type of insert;
- Figures 18 - 19 show subsequent steps of the application of the above different type of insert, according to the proposed procedure;
- Figure 20 is a lateral, partially section view, of an insert according to a further embodiment;
- Figure 21 is a corresponding top view of the insert of Figure 20;
- Figure 22 is a top view of a portion of a toothed belt prepared for the application of the insert according the above further embodiment;
- Figure 23 is a section view taken along XXIII-XXIII of Figure 22;
- Figure 24 is a section view taken along XXIV-XXIV of Figure 22;
- Figure 25 shows the insert according to the embodiment of Figures 20 - 21 applied to a suitable portion of toothed belt.

With reference to the above Figures, the reference numeral 1 indicates a transport element aimed at being fastened to a toothed belt 3 by an insert 2 applied to the same toothed belt 3.

The toothed belt 3 is made of synthetic material and has, in known way, an inner strengthening core made of threads 4, e.g. metallic or of synthetic resin.

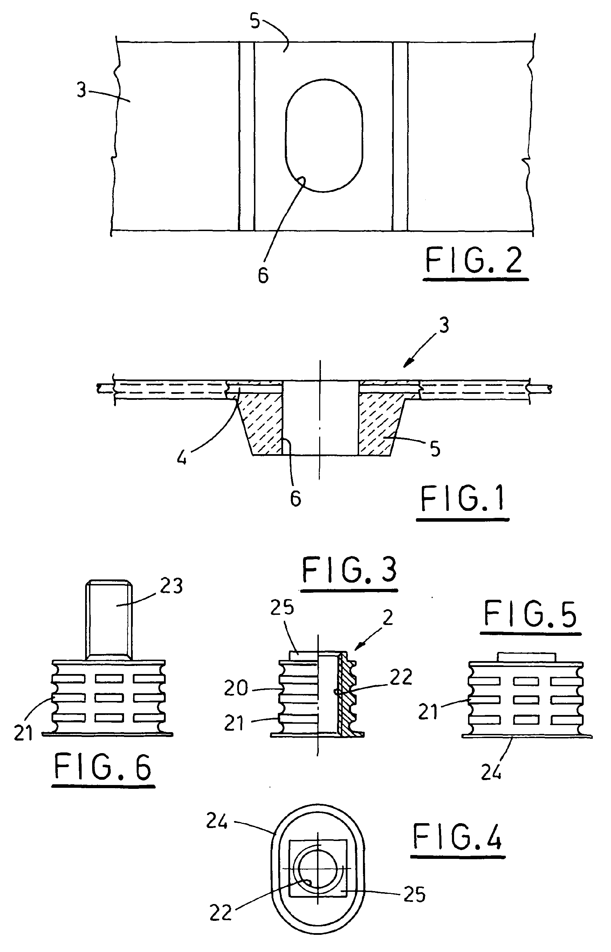

As it is seen in Figure 1, a through hole 6 is made in a region corresponding to a tooth 5 of the toothed belt 3, orthogonal to the base of the tooth 5.

The hole 6 is elongated in a direction transversal to the longitudinal axis of the toothed belt 3, so as to have a substantially oval shape.

The hole 6 acts as a housing for an insert 2, which is practically a metallic bush, having substantially the same cross-section as the hole 6.

The insert 2 has, on its outer surface, a series of grooves 20 defined by continuous ribs 21 (Figure 3) or broken ribs (Figure 5), which are perpendicular to the axis of the insert 2.

The insert 2 has a threaded hole 22, axial thereto, for coupling with a screw 10 of fastening with the transport element 1.

Otherwise, the insert 2 can have a threaded shank 23, axial thereto, which enters a corresponding hole of the transport element 1 (Figure 6).

The insert 2 forms, at one end, a ring-like crown 24, preferably thin, and at the other end, a tang 25, preferably prismatic, which acts as a reference for positioning of the transport element 1.

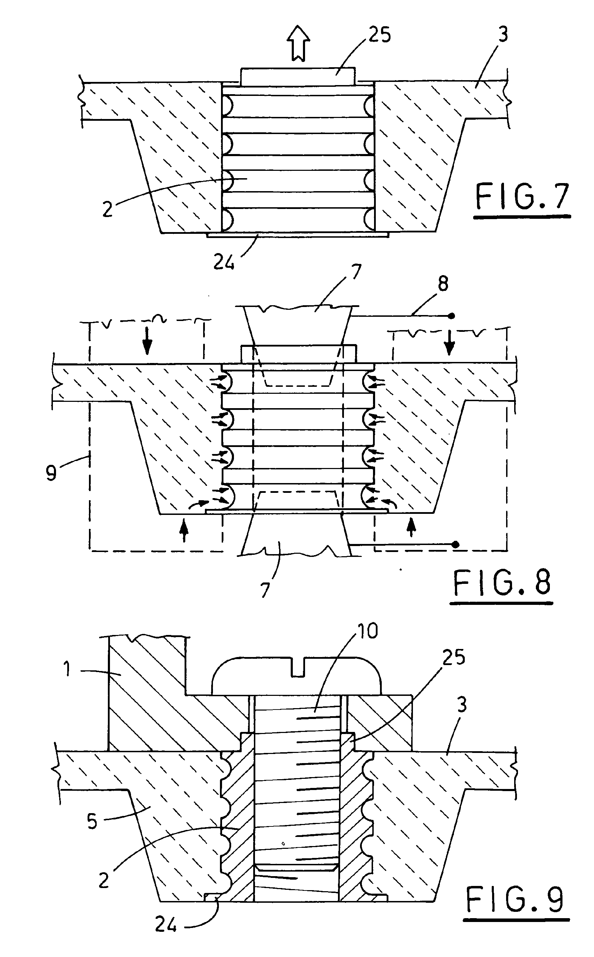

According to the proposed procedure, the insert 2 is introduced, with interference, into the hole 6, made previously in the toothed belt 3, until the ring-like crown 24 goes in abutment against the outer surface of the tooth 5 (Figure 7).

At this point, the material of the tooth 5, touching the insert 2, is melted to the plastic state and this causes the filling of the grooves 20 by the same material, so expanded.

Therefore, the insert 2 is made stably integral with the toothed belt 3, as it is longitudinally fixed due to the interference created between the belt 3 and the grooves 20.

Such plastic deformation can be obtained for example in two different ways, described in the following.

In a first case, the insert 2 introduced into the hole 6, is clamped between a pair of electrodes 7, which are connected to an power source 8 to apply a suitable voltage for a prefixed period of time, so as to cause, due to joule effect created by the current passing through the electrodes, plastic deformation of the toothed belt 3 in the region situated near the insert 2 (Figure 8).

In a second case, it is possible to cause a plastic deformation in a region corresponding to at least a part of the surface of the through hole 6 by a suitable chemical action, which is to be carried out before or after the application of the insert 2.

The plastic deformation of the toothed belt 3 allows also dipping a ring-like crown 24, with small thickness, in the tooth 5, until the crown becomes flush with the outer surface of the tooth 5.

This effect can suitably be facilitated by use of a vice, as shown with broken line 9 in Figure 8.

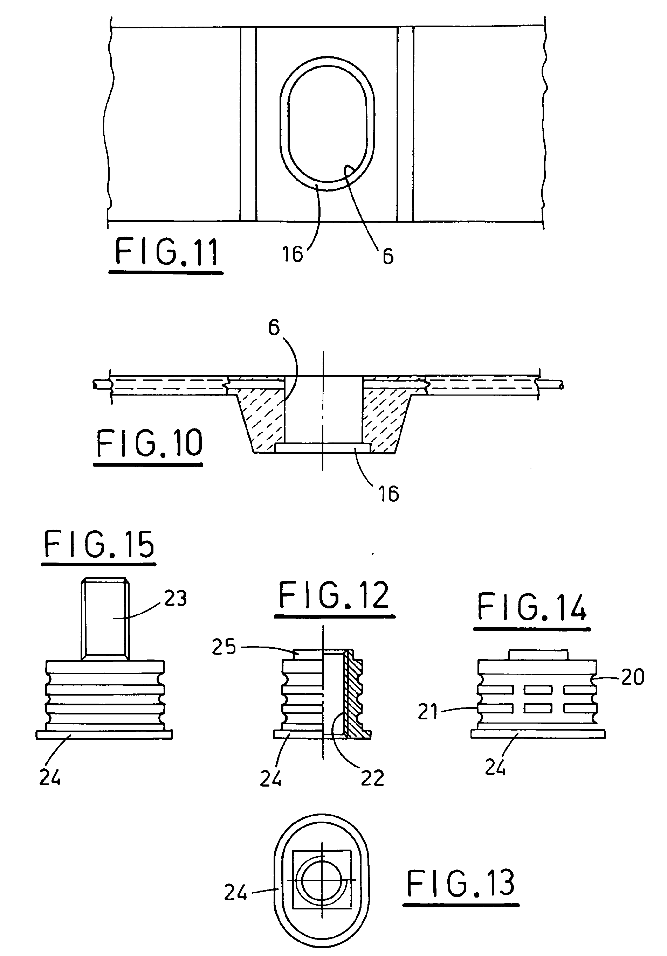

Otherwise, it is possible to use an insert 2 having a ring-like crown 24 with bigger thickness, as shown in Figures 12 - 15.

In this case, the hole 6 has a ring-like shoulder 16, which receives the crown 24 (see Figures 10 - 11).

After the insert 2 has been made solidly integral with the toothed belt 3, it is possible to fasten thereto the transport element 1 by the screw 10, which engages with the threaded hole 22 of the insert 2 (Figure 9).

Obviously, the ring-like crown 24 gives an additional resistance to the pulling performed by the screw 10 during the tightening of the transport element 1, as well as during the expected working conditions.

Therefore, the described procedure fulfills the object of an easy and rapid application of an insert in a desired position along the toothed belt.

Actually, the insert 2 can be applied in an extremely simple way in a region corresponding to any of the teeth 5 of the toothed belt 3.

For this purpose, it is enough to make the hole 6 in the region corresponding to the tooth 5, introduce the insert 2 and cause a plastic deformation of the hole 6 walls, by a chemical or electrical action.

In the latter case, the deformation can be obtained e.g. by tools commonly used in the technical field, such as traditional spot welders.

Due to the plastic deformation of a portion of material of the toothed belt 3, the insert 2 is stably fastened to the toothed belt 3 and prepared for the fixing of the transport element 1.

Moreover, the oval or polygonal section of the insert 2 and of the corresponding hole 6, in which it is housed, prevents the insert from rotating on its axis.

Therefore, one of the advantages of the described procedure lies in the fact that it allows application of the inserts 2 only in the positions, which are actually required for the fastening of the transport elements 1, which evidently results in the use versatility.

Another advantage results from the fact that the mechanical resistance of the toothed belt 3 is not jeopardized significantly, since the continuity of the strengthening core is partially interrupted only in the points, in which it is effectively required for the application of the inserts 2.

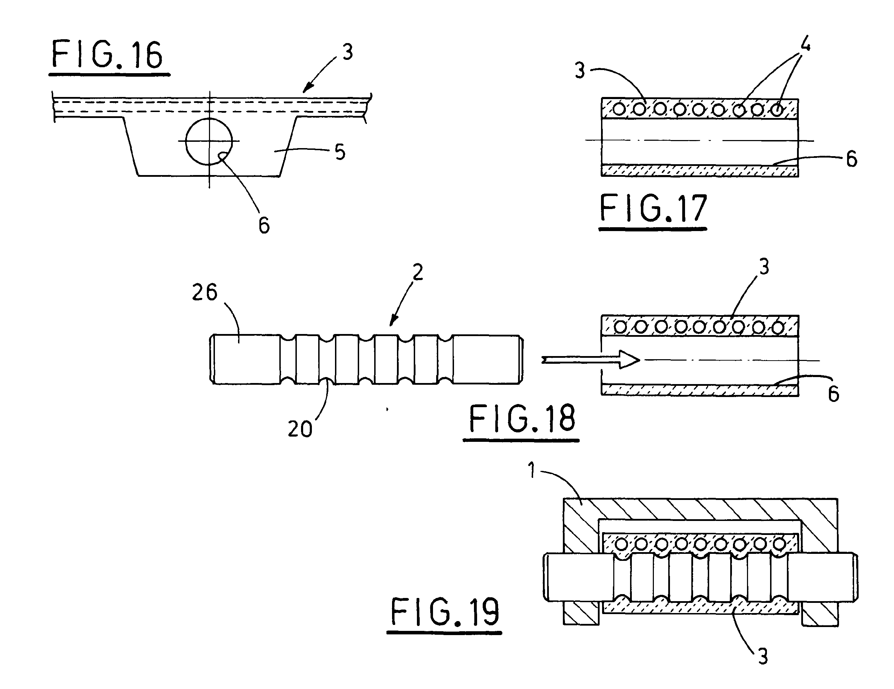

Figures 16 - 19 show the application of a different type of insert 2, which is to be introduced into a hole 6, made through along an axis parallel to the base of the tooth 5 and transversal to the belt 3.

In this case, the insert 2 includes advantageously a cylindrical shank 26 with the grooves 20, thus also the hole 6 has a corresponding cylindrical shape.

According to the already described procedure, the cylindrical insert 2 is introduced passing with interference in the hole 6, so as to have the opposite ends protruding from the sides of the toothed belt 3 (Figures 18, 19).

The localized plastic deformation of the belt 3, which occupies the grooves 20 and makes the insert 2 stably integral, is obtained in the above described way, by an electrical or chemical action.

Then, the transport element 1 is fastened in known way to the ends of the insert 2 (Figure 19).

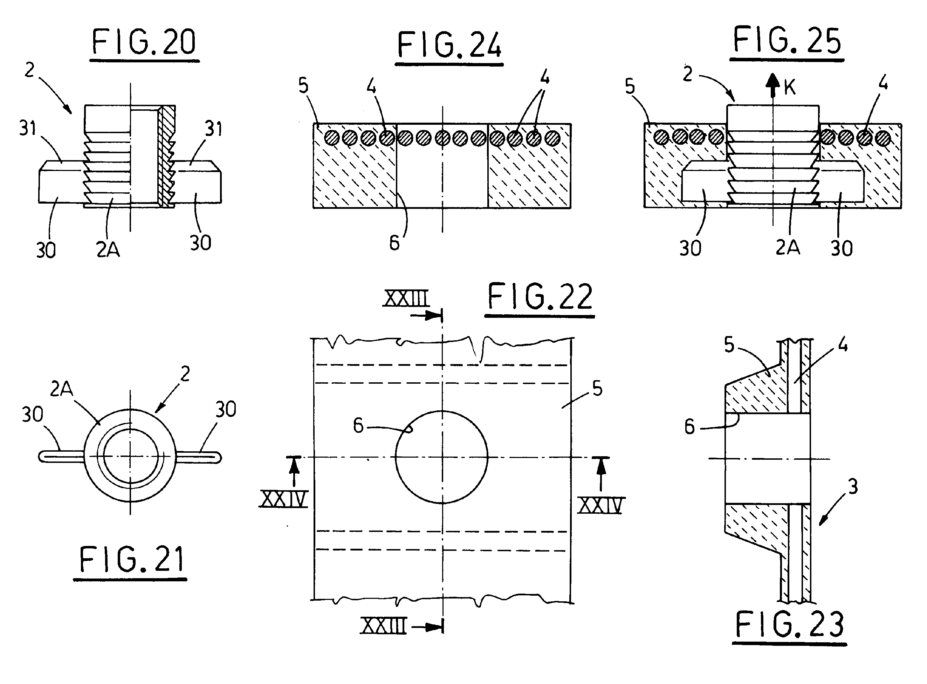

Another embodiment of the insert 2 is shown in Figures 20 - 21, where the insert 2 has a central portion 2A, from which e.g. two opposite wings 30 protrude crosswise with respect to the axis of the portion 2A: in this case the latter is introduced into the through hole 6 and the wings 30 penetrate, at least partially, into the body of the tooth 5, e.g. until the wings go in abutment against the strengthening core 4.

Afterwards, as it has been already shown, the material of the toothed belt 3, which touches the insert 2, or at least its part, is plastically deformed by e.g. an electrical or chemical action.

The incorporation of the wings 30 in the tooth 5 can be facilitated in different ways, for example by cutting means 31, formed by the upper part of the wings 30, or by grooves made in the tooth 5 for receiving, at least partially, the wings 30 when the insert 2 is introduced in the hole 6, or by tightening the wings 30 against the surface of the tooth 5, by clamp means (not shown), up to a complete penetration of the insert 2.

It is also possible to bring the wings 30 in abutment against the surface of the tooth 5, determining a partial introduction of the central portion 2A of the insert 2 in the hole 6, and consequently causing the plastic deformation of the material of the toothed belt 3, at least touching the wings 30 contemporarily with their penetration into the body of the tooth 5.

This can be obtained, e.g. by an electrical or chemical action, according to the above described procedure: thus, the insert 2 finds smaller resistance to the penetration in the tooth 5, which can be further facilitated by the use of clamp means, in the already described way.

The wings 30 have an anti-rotation function, so that the central portion 2A and the through hole 6 can have a circular shape; moreover, they increase the resistance of the insert 2 with respect to axial outwards traction(as the arrow K of Figure 25), caused by the stresses transmitted thereto by the connected transport element 1.

## Claims

1. Method for application of an insert to a toothed belt, **characterized in that** it includes the following steps:
- making a through hole (6) in a region corresponding to a tooth (5) of said toothed belt (3);
- introducing, into at least said through hole (6), an insert (2) having on its outer surface, at least a series of grooves (20);
- causing a plastic deformation, localized near said insert (2), of at least a part of material forming said toothed belt (3), so as to at least fill the grooves (20) of the insert (2) for making said insert (2) stably integral with said toothed belt (3).

2. Process, as claimed in claim 1, in which said insert (2) is metallic, **characterized in that** it includes tightening of said insert (2) between a pair of electrodes (7) and **in that** a suitable voltage is applied to the latter for a prefixed period of time, so as to cause said localized plastic deformation of said toothed belt (3) near the insert (2).

3. Process, as claimed in claim 1, **characterized in that** said plastic deformation is caused by a chemical action occurring at least in one portion of the surface of said through hole (6).

4. Process, as claimed in claim 1, **characterized in that** said through hole (6) is made orthogonal to the base of said tooth (5) of the toothed belt.

5. Process, as claimed in claim 4, **characterized in that** said hole (6) is elongated in a direction transversal to the longitudinal axis of said toothed belt (3), so as to have a substantially oval shape.

6. Process, as claimed in claim 4, **characterized in that** said hole (6) has a polygonal shape.

7. Process, as claimed in claim 1, **characterized in that** a ring-like crown (24), forming an end of said insert (2), goes in abutment against the surface of said tooth (5) and subsequently, said ring-like crown (24) is incorporated in said tooth (5), due to said plastic deformation.

8. Process, as claimed in claim 7, **characterized in that** said ring-like crown (24) is pushed against said surface of said tooth (5), by clamp means (9), during the introduction of said insert (2) into said hole (6), in order to facilitate the subsequent incorporation of said ring-like crown (24) in said tooth (5).

9. Process, as claimed in claim 7 or 8, **characterized in that** said ring-like crown (24) is introduced into a ring-like shoulder (16) made in said hole (6).

10. Process, as claimed in claim 1, in which said insert (2) forms at least one wing (30), which extends crosswise wit respect to the relative longitudinal axis, **characterized in that** said insert (2) is introduced and said wing penetrates, at least partially, into the body of said tooth (5).

11. Process, as claimed in claim 10, **characterized in that** said wing (30) has cutting means (31) for facilitating the penetration, at least partial, of said wing (30) into the body of said tooth (5).

12. Process, as claimed in claim 10 or 11, **characterized in that** a groove is made in said tooth (5), to receive, at least partially, said wing (30) during the introduction of said insert (2) in at least said through hole (6), in order to facilitate the penetration, at least partial, of said wing (30) into the body of said tooth (5).

13. Process, as claimed in claim 1, in which said insert (2) has at least one wing (30), which extends crosswise with respect to the relative longitudinal axis, **characterized in that** said insert (2) is introduced, until said wing (30) goes in abutment against the surface of said tooth (5), and subsequently, said wing (30) is incorporated in said tooth (5), due to said plastic deformation.

14. Process, as claimed in claim 1, **characterized in that** said hole (6) is made along an axis parallel to the base of said tooth (5) and transversal to said toothed belt (3).

15. Process, as claimed in any of the previous claims, **characterized in that** said insert (2) is introduced, passing through said hole (6), so as to protrude from the latter on the opposite ends.

16. Process, as claimed in claim 1 or 8 or 9 or 10 or 11 or 12 or 13, **characterized in that** the insert (2) is introduced into said through hole (6) with interference.
